# FASCICULE DE BREVET EUROPEEN

(11) **EP 1 925 501 B1**
(45) Date de publication et mention de la délivrance du brevet: **06.01.2010**
(21) Numéro de dépôt: 07301566.1
(22) Date de dépôt: 22.11.2007
(51) Int. Cl.: B60R 5/04, B60R 7/02, B62D 25/20, B62D 43/10, B60R 11/06

(54) **Bac de coffre pour véhicule automobile**
Kofferraumverkleidung für ein Fahrzeug
Boot liner for an automobile

(30) Priorité: 22.11.2006 FR 0655050
(43) Date de publication de la demande: 28.05.2008
(73) Titulaire: RENAULT S.A.S., 92100 Boulogne Billancourt (FR)
(72) Inventeur: Vilatte, Valérie, 78960, Voisins Le Bretonneux (FR)

(56) Documents cités:
- DE-A1- 19 834 134
- DE-U1- 29 810 334

## Description

### DOMAINE TECHNIQUE

La présente invention concerne un bac destiné à être positionné dans un coffre d'un véhicule automobile.

Le coffre d'un véhicule est formé par le volume arrière situé derrière les sièges des passagers arrière ou la banquette arrière. Dans certains véhicules, par exemple ceux utilisés par des représentants de commerce, l'espace intérieur est aménagé par démontage de ces sièges arrière, dans le but d'agrandir le coffre.

Un fond du coffre est constitué, soit directement par la tôle de la caisse recouverte par un matériau de type moquette, soit par un plancher de charge ou un bac rapporté, réalisé par exemple en un matériau plastique ou en bois. Dans certains modèles, le fond du coffre comprend également un compartiment servant à loger une roue de secours. Dans d'autres modèles, des moyens de fixation pour la roue de secours, située sous le véhicule, sont prévus au niveau du fond du coffre, du plancher ou du bac.

Généralement, le plancher de charge est un panneau constituant le fond du véhicule et qui peut supporter des charges lourdes, d'environ 100 kg. De manière analogue, le bac mis en place occupe l'intégralité de l'espace intérieur situé en arrière du véhicule. Le bac comprend une plaque de base avec une surface correspondant à la surface de la tôle de la caisse. La plaque de base est sensiblement horizontale. Le bac comprend en outre une ou plusieurs parois latérales, se déployant vers le haut à partir d'un ou plusieurs des cotés de la plaque de base.

La fonction de ce bac est de servir au stockage et au rangement d'objets et de protéger la structure de la caisse métallique du véhicule, ainsi que toutes les garnitures qui équipent son espace intérieur. Le contenu du bac est accessible par un hayon arrière ou par un capot arrière ou encore par des portes arrière.

### ÉTAT DE LA TECHNIQUE ANTÉRIEURE

Les bacs existants sont montés dans les coffres par l'intermédiaire d'un ou plusieurs blocs de mousse. Ce ou ces blocs sont positionnés sous la plaque de base du bac et sont ainsi intercalés entre cette plaque de base et la surface supérieure de la tôle de la caisse du véhicule. Les blocs assurent le maintien du bac en formant des cales pour sa stabilisation.

Cependant, ces moyens de maintien présentent l'inconvénient principal de nécessiter une étape supplémentaire de placement de cales de mousse, lors du montage du bac dans le coffre. Le placement de ces cales ne doit pas être oublié sous peine d'obtenir un bac installé de manière bancale. Le placement doit être effectué soigneusement par l'opérateur. Le placement des cales en mousse est ainsi une opération qui est coûteuse en termes de main d'oeuvre et de temps de montage.

Dans le document DE-U-29810334, qui constitue l'art de la technique le plus proche, il est décrit un bac de coffre dont les zones de rangement reposent sur un plancher de véhicule automobile. Ce bac de coffre est immobilisé par des vis dont le montage est une opération longue et coûteuse.

### EXPOSÉ DE L'INVENTION

Un problème principal que se propose de résoudre l'invention consiste à mettre au point un bac destiné à être positionné dans une partie arrière d'un habitacle d'un véhicule automobile. Un deuxième problème est d'optimiser le maintien d'un bac rapporté à la caisse au niveau du coffre. Un troisième problème consiste à réaliser un bac dont la mise en place est particulièrement simple à réaliser. Un quatrième problème est la nécessité de réduire le coût d'un bac en évitant la présence de parties ou des pièces supplémentaires servant à son montage. Un autre problème encore est de prévoir des moyens de rangement pour un bac de coffre.

L'invention concerne donc un agencement tel que défini par la revendication 1.

L'agencement du bac comprend des moyens servant à la fois pour du rangement et pour un maintien de ce même bac à la tôle de caisse du véhicule. Il n'y a plus de pièces supplémentaires, telles que des cales, stockées en bords de chaîne de montage du véhicule.

Les revendications 2 à 5 définissent des caractéristiques avantageuses que peut incorporer l'agencement selon l'invention.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue du dessus du bac selon l'invention ; et
- la Figure 2 représente une vue en coupe longitudinale du bac selon le plan II - II de la Figure 1.

### EXPOSÉ DÉTAILLÉ DE MODES DE RÉALISATION PRÉFÉRÉS

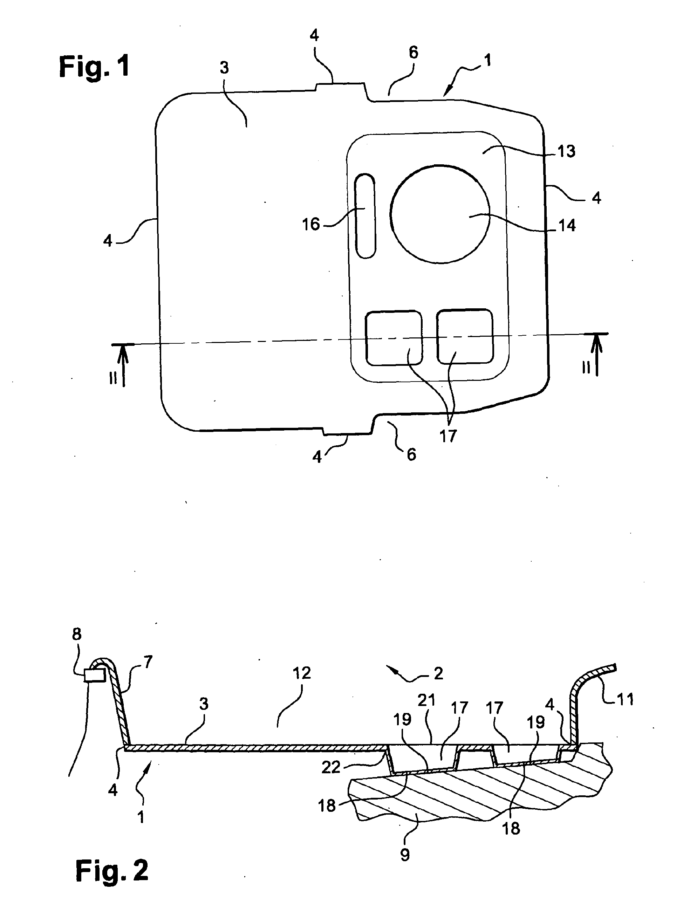

Comme l'illustrent les Figures 1 et 2, un bac (1) occupe le fond du coffre d'origine (2) du véhicule automobile. Le bac (1) présente une forme dépendant de la forme et des dimensions du coffre (2). Le bac (1) est réalisé en un matériau thermoplastique moulé, par exemple en un polypropylène.

Le bac (1) comprend une plaque de base horizontale (3) et quatre côté latéraux (4). La plaque de base (3) comprend deux décrochements latéraux (6), correspondant aux passages des roues du véhicule. Les passages de roues sont formés par des éléments latéraux proéminents qui font saillis vers l'intérieur du coffre (2) et qui en limitent localement la largeur.

Les côtés latéraux (4) de la plaque de base (3) peuvent, par exemple, comporter des pattes métalliques destinées à être soudées sur des longerons du châssis du véhicule. Une paroi transversale d'extrémité avant sensiblement verticale (7) assure une fixation avant du bac (1) à un élément de structure sous la forme d'une traverse (8) de la caisse (9) du véhicule. Une paroi transversale d'extrémité arrière sensiblement verticale (11) est fixée à la partie arrière de la caisse (9) du véhicule. La plaque de base (3) et les parois (7 et 11) définissent un volume intérieur (12) pour le bac (1).

Le bac (1) comprend un secteur (13), plus particulièrement situé à l'arrière du bac (1), comprenant plusieurs zones concaves, par exemple sous la forme de grosses encoches ou de creux à fond plat, se déployant vers le bas à partir de la plaque de base (3).

Comme cela est particulièrement visible en Figure 1, un trou (14) présente une forme vue du dessus globalement circulaire. Un creux d'un premier type (16) présente une forme vue du dessus globalement rectangulaire. Deux creux d'un deuxième type (17) présentent une forme vue du dessus globalement carrée.

Selon l'invention, de part leur configuration, les creux (16 et 17) assurent le maintien et le calage du bac (1) au niveau de la caisse (9) du véhicule. Les creux (16 et 17) comportent chacun un fond (18), dont la surface externe, sensiblement plane, est inclinée par rapport à la plaque de base (3). Cette surface externe étant sensiblement parallèle à une surface supérieure (19) formée par la tôlerie de la caisse (9), la surface inférieure (18) vient reposer en appui sur la surface supérieure (19) formée par la tôlerie de la caisse (9).

Le trou (14) présente une forme et des dimensions en plan vu du dessus analogues à celles de la roue de secours. Le trou (14) permet un accès à un mécanisme de fixation de la roue de secours, cette dernière étant située sous la caisse (9) du véhicule.

Le trou (14) et les creux (16 et 17) sont fermés par un couvercle ou trappe amovible (21), qui est formé à partir d'une plaque rigide libre. La trappe (21) coopère avec des moyens de retenue, sous la forme d'un épaulement continu (22), présent sur le périmètre du secteur (13) de la plaque de base (3) incluant le trou (14) et les creux (16 et 17), de façon à ce qu'elle soit maintenue en position fermée. En position horizontale, les bords de la trappe (21) sont posés sur l'épaulement (22). En raison de l'épaulement, la trappe (21) vient à fleur de la plaque de base (3).

La trappe est destinée à masquer le trou (14) et les creux (16 et 17). La trappe (21) peut être réalisée en bois ou en plastique, recouvert par un matériau thermoplastique ou textile, conférant à la surface de la trappe des qualités de toucher agréable et souple. La trappe (21) peut être munie d'une poignée de préhension, par exemple sous la forme d'un évidement.

Des objets divers peuvent être rangés dans les creux (16 et 17), comme par exemple un triangle de sécurité, un gilet de visibilité, une trousse de secours, de l'outillage de réparation, etc. Les creux (16 et 17) constituent également des éléments de rigidification de la plaque de base (3) et ainsi du bac (1), en formant des zones de reprise d'effort.

La présente invention n'est pas limitée aux modes de réalisation décrits et illustrés. De nombreuses modifications peuvent être réalisées, sans pour autant sortir du cadre défini par la portée du jeu de revendications.

## Revendications

1. Agencement d'un bac de coffre (1) dans un coffre arrière (2) d'un véhicule automobile, étant solidarisé à au moins un élément de structure (8) du véhicule et étant du type comprenant une plaque de base sensiblement horizontale (3) et des moyens pour maintenir le bac (1) au niveau d'une tôle d'une caisse (9) du véhicule située sous ledit bac (1), ledit bac (1) comportant au moins une zone de rangement (16, 17) coopérant avec la tôle de caisse (9) et comportant un fond (18) dont une surface externe, sensiblement parallèle à une surface supérieure (19) de la tôle de caisse (9), vient en appui contre la surface supérieure (19) de ladite tôle de caisse (9), **caractérisé en ce que** la surface externe du fond (18) de la zone de rangement (16, 17) et la surface supérieure (19) de la tôle de caisse (9) sont inclinées par rapport à la plaque de base (3) de manière que la zone de rangement (16, 17) forme les moyens pour maintenir ledit bac (1).

2. Agencement selon l'une quelconque des revendications précédentes, **caractérisé en ce que** le bac (1) comporte un trou (14) placé au-dessus de l'emplacement de la roue de secours.

3. Agencement selon la revendication 2, **caractérisé en ce que** la zone de rangement (16, 17) et le trou (14) sont fermés par une trappe (21), dont la surface se trouve dans le prolongement de la plaque de base (3).

4. Agencement selon l'une quelconque des revendications précédentes, **caractérisé en ce que** la zone de rangement (16, 17) est une zone concave formée d'une pièce avec le bac (1).

5. Agencement selon l'une quelconque des revendications précédentes, **caractérisé en ce que** la zone de rangement (16, 17) est formée par thermoformage.

## Claims

1. Arrangement of a boot liner (1) in a rear luggage compartment (2) to the motor vehicle, secured to at least one structural element (8) of the vehicle and of the type comprising a substantially horizontal baseplate (3) and means for holding the liner (1) at a bodywork panel (9) of the vehicle situated under said liner (1), the said liner (1) comprising at least one storage zone (16, 17) collaborating with the bodywork panel (9) and comprising a bottom (18) of which an external surface, substantially parallel to an upper surface (19) of the bodywork panel (9) presses against the upper surface (19) of the said bodywork panel (9), **characterized in that** the external surface of the bottom (18) of the storage region (16, 17) and the upper surface (19) of the bodywork panel (9) are inclined with respect to the baseplate (3) in such a way that the storage region (16, 17) forms the means of holding the said liner (1) in position.

2. Arrangement according to Claim 1, **characterized in that** the liner (1) comprises a hole (14) positioned above the location for the spare wheel.

3. Arrangement according to Claim 2, **characterized in that** the storage region (16, 17) and the hole (14) are closed off by a hatch (21), the surface of which lies in the continuation of the baseplate (3).

4. Arrangement according to any one of the preceding claims, **characterized in that** the storage region (16, 17) is a concave region formed of one piece with the liner (1).

5. Arrangement according to any one of the preceding claims, **characterized in that** the storage region (16, 17) is formed by thermoforming.

## Patentansprüche

1. Anordnung einer Kofferraumverkleidung (1) in einem hinteren Kofferraum (2) eines Kraftfahrzeugs, die mit mindestens einem Strukturelement (8) des Fahrzeugs fest verbunden und solcher Art ist, dass sie eine im Wesentlichen horizontale Grundplatte (3) und Mittel umfasst, um die Verkleidung (1) an einem Karosserieblech (9) des Fahrzeugs zu halten, das unter der Verkleidung (1) angeordnet ist, wobei die Verkleidung (1) mindestens einen Verstaubereich (16, 17), der mit dem Karosserieblech (9) zusammenwirkt, und einen Boden (18) umfasst, von dem eine äußere Fläche, die zu einer oberen Fläche (19) des Karosserieblechs (9) im Wesentlichen parallel verläuft, an der oberen Fläche (19) des Karosserieblechs (9) anliegt, **dadurch gekennzeichnet, dass** die äußere Fläche des Bodens (18) des Verstaubereichs (16, 17) und die obere Fläche (19) des Karosserieblechs (9) so bezüglich der Grundplatte (3) geneigt sind, dass der Verstaubereich (16, 17) die Mittel zum Halten der Verkleidung (1) bildet.

2. Anordnung nach Anspruch 1, **dadurch gekennzeichnet, dass** die Verkleidung (1) ein Loch (14) umfasst, das über der Position des Ersatzrads angeordnet ist.

3. Anordnung nach Anspruch 2, **dadurch gekennzeichnet, dass** der Verstaubereich (16, 17) und das Loch (14) von einer Klappe (21) verschlossen werden, deren Oberfläche sich in der Verlängerung der Grundplatte (3) befindet.

4. Anordnung nach einem der vorhergehenden Ansprüche, **dadurch gekennzeichnet, dass** es sich bei dem Verstaubereich (16, 17) um einen konkaven Bereich handelt, der einstückig mit der Verkleidung (1) ausgebildet ist.

5. Anordnung nach einem der vorhergehenden Ansprüche, **dadurch gekennzeichnet, dass** der Verstaubereich (16, 17) mittels Wärmeformung gebildet ist.
